(19) **Europäisches Patentamt**
**European Patent Office**
**Office européen des brevets**

(11) **EP 4 661 397 A1**

(12) **EUROPEAN PATENT APPLICATION**

(43) Date of publication:
**10.12.2025   Bulletin 2025/50**

(51) International Patent Classification (IPC):
**H04N 19/12** *(2014.01)*     **H04N 19/157** *(2014.01)*
**H04N 19/176** *(2014.01)*     **H04N 19/593** *(2014.01)*
**H04N 19/70** *(2014.01)*

(21) Application number: **24305894.8**

(22) Date of filing: **06.06.2024**

(52) Cooperative Patent Classification (CPC):
**H04N 19/12; H04N 19/157; H04N 19/176;
H04N 19/593; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
  MONTREAL, H2J 1G1 (CA)**
• **PURI, Saurabh
  SAINT-LAZARE, J7T 0P6 (CA)**
• **NASER, Karam
  35250 MOUAZE (FR)**
• **LE LEANNEC, Fabrice
  35830 BETTON (FR)**
• **BOSSEN, Frank
  TORONTO, ON M6G 3H1 (CA)**

(74) Representative: **Vossius & Partner
Patentanwälte Rechtsanwälte mbB
Siebertstraße 3
81675 München (DE)**

(54) **IMPLICIT TRANSFORM DERIVATION**

(57)      Systems, devices, and methods are described herein for implicit transform derivation. A device (e.g., for video decoding) may obtain a block. The device may determine a prediction mode for the block. On a condition that the prediction mode is a first intra prediction mode, the device may determine a first transform index derivation mode (TIDM) value. On a condition that the prediction mode is a second intra prediction mode, the device may determine a second TIDM value. The device may determine a transform index based on the determined first or second TIDM value. The transform index may identify an inverse transform. The device may perform inverse transform for the block based on the inverse transform.

FIG. 11

EP 4 661 397 A1

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, devices, and methods are described herein for improving implicit transform derivation. An example method (e.g., for video decoding) may involve obtaining a block and determining a prediction mode for the block. On a condition that the prediction mode is a first intra prediction mode, a first transform index derivation mode (TIDM) value may be determined. On a condition that the prediction mode is a second intra prediction mode, a second TIDM value may be determined. A transform index may be determined based on the determined first or second TIDM value. The transform index may identify an inverse transform. The method may involve performing inverse transform for the block based on the inverse transform.

Determining the transform index based on the determined first or second TIDM value may involve determining an inverse transform set, from a plurality of inverse transform sets, based on the determined first or second TIDM value. The transform index may be determined based on a number of inverse transform sets in the plurality of inverse transform sets, and a number of candidate inverse transforms in the inverse transform set.

Determining the transform index based on the determined first or second TIDM value may involve determining an inverse transform set, from a plurality of inverse transform sets, based on the determined first or second TIDM value. The plurality of inverse transform sets may include a number of inverse transform sets. The inverse transform set may include a number of inverse transform indices. The transform index may be determined based on (the determined first or second TIDM value modulo the number of inverse transform sets) modulo the number of inverse transform indices in the inverse transform set.

The transform index may be a first transform index. The inverse transform may be a first inverse transform. A second transform index may be identified based on the prediction mode. The second transform index may indicate a second inverse transform.

The first inverse transform and the second inverse transform may be a primary inverse transform pair. An inverse transform kernel associated with the inverse transform may be determined.

The method may involve receiving an indication that implicit inverse transform selection is enabled for the block. The transform index may be determined based on the determined first or second TIDM value is further based on the indication.

Determining the transform index based on the determine first or second TIDM values may involve obtaining a plurality of inverse transform sets. The plurality of inverse transform sets may include a number of inverse transform sets. A lookup table index may be identified based on the prediction mode and the number of inverse transform sets. The transform index may be determined based on the lookup table index.

Identifying the transform index may be based on a size of the block. A video decoding device may include a processor configured to implement the steps of the methods described herein.

An example method (e.g., for video encoding) may involve determining a prediction mode for a block. On a condition that the prediction mode is a first intra prediction mode, a first TIDM value may be determined. On a condition that the prediction mode is a second intra prediction mode, a second TIDM value may be determined. A transform index may be determined based on the determined first or second TIDM value. The transform index may identify an transform. The method may involve performing transform for the block based on the transform.

Determining the transform index based on the determined first or second TIDM value may involve determining a transform set, from a plurality of transform sets, based on the determined first or second TIDM value. The transform index may be determined based on a number of transform sets in the plurality of transform sets, and a number of candidate transforms in the transform set.

Determining the transform index based on the determined first or second TIDM value may involve determining a transform set, from a plurality of transform sets, based on the determined first or second TIDM value. The plurality of transform sets may include a number of transform sets. The transform set may involve a number of transform indices. The transform index may be determined based on (the determined first or second TIDM value modulo the number of transform sets) modulo the number of transform indices in the transform set.

The transform index may be a first transform index. The transform may be a first transform. A second transform index may be identified based on the prediction mode. The second transform index may include a second transform.

The first transform and the second transform may be a primary transform pair. A transform kernel associated with the transform may be determined. The method may involve an indication that implicit transform selection is enabled for the block. Determining the transform index based on the determined first or second TIDM value may be based on the indication.

Determining the transform index based on the determine first or second TIDM values may involve obtaining a plurality of transform sets. The plurality of transform sets may include a number of transform sets. A lookup table index may be identified based on the prediction mode and the number of transform sets. The transform index may be determined based on the lookup table index. Identifying the transform index may be on a size of the block.

A video encoding device may include a processor configured to implement the steps of the method(s) described herein.

Video data comprising information representative of the encoded current block may be generated according to the method(s) described herein.

A computer program product may be stored on a non-transitory computer readable medium and include program code instructions for implementing the steps of the method(s) described herein (e.g., when executed by a processor).

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example block-based video encoder.

FIG. 3 is a diagram showing an example video decoder.

FIG. 4 is a diagram showing an example of a system in which various aspects and examples may be implemented.

FIG. 5 illustrates example of explicit multiple transform set (MTS) selection.

FIG. 6 illustrates an example of implicit transform selection based on the value of an intra prediction mode (IPM).

FIG. 7 illustrates an example flowchart for implicit transform selection.

FIGs. 8A and 8B illustrate examples of a region of interest (ROI) for a low frequency non-separable transform (LFNST).

FIG. 9 illustrates an example of non-separable primary transform (NSPT) applied to a small block.

FIG. 10 illustrates an example of implicit transform index derivation.

FIG. 11 illustrates an example flowchart of the transform index derivation process based on a lookup table.

FIG. 12 illustrates an example implicit transform index based on a lookup table.

FIG. 13 illustrates an example implicit transform index based on a size index.

FIGs. 14A and 14B illustrate an example implicit transform index based on a mode index.

## DETAILED DESCRIPTION

A detailed description of illustrative embodiments will now be described with reference to the various Figures. Although this description provides a detailed example of possible implementations, it should be noted that the details are intended to be exemplary and in no way limit the scope of the application.

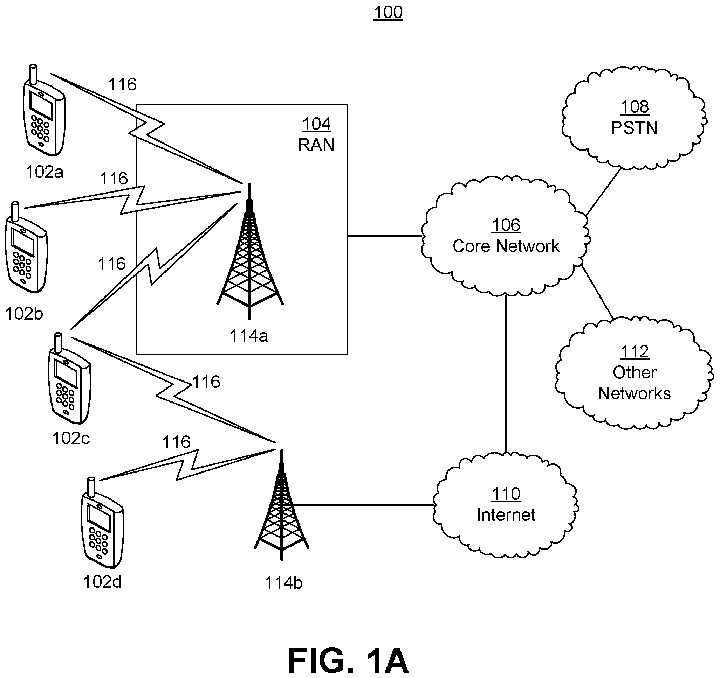

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

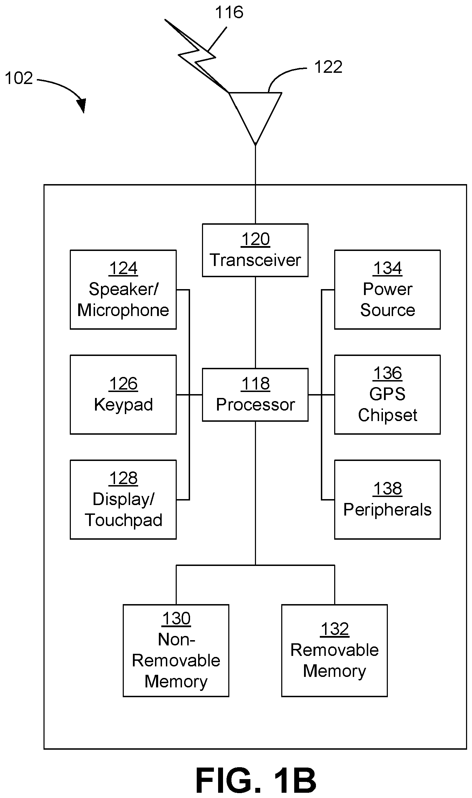

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

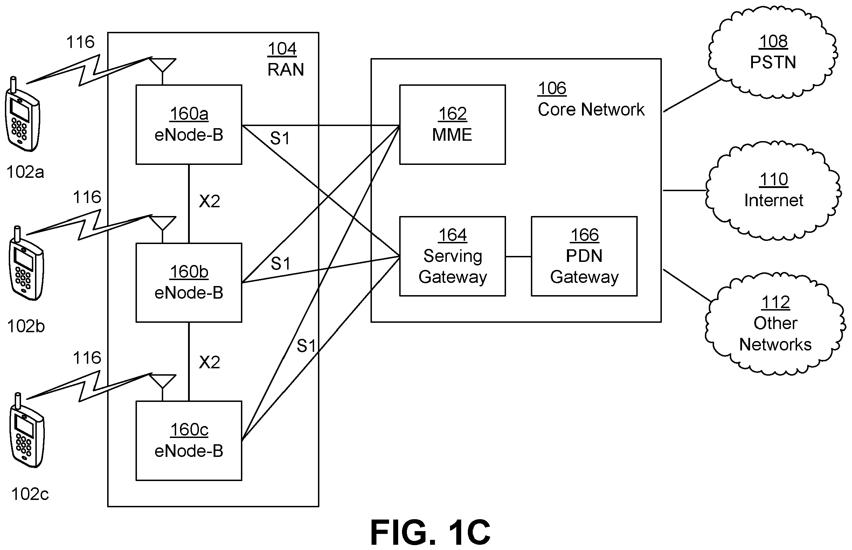

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11 ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

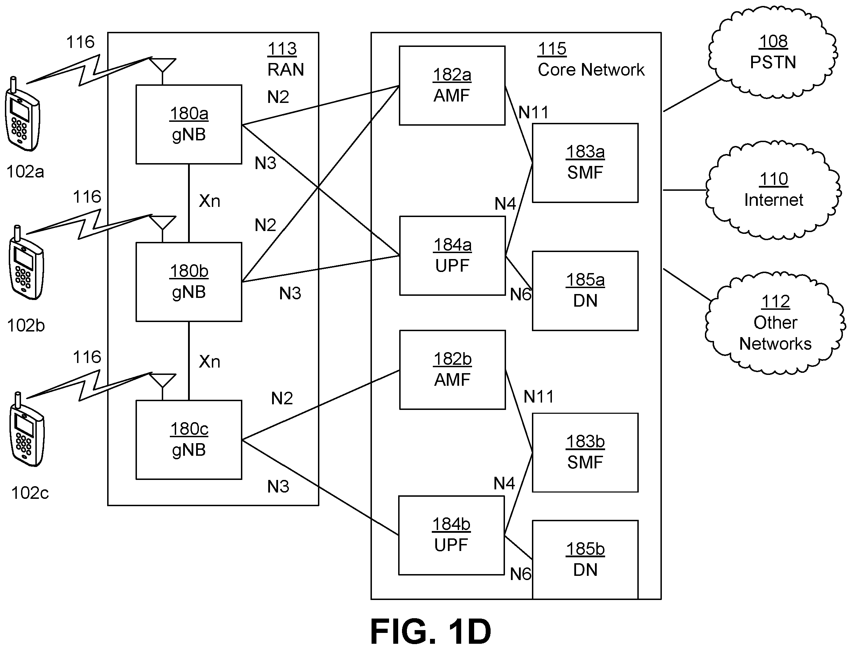

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may perform testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

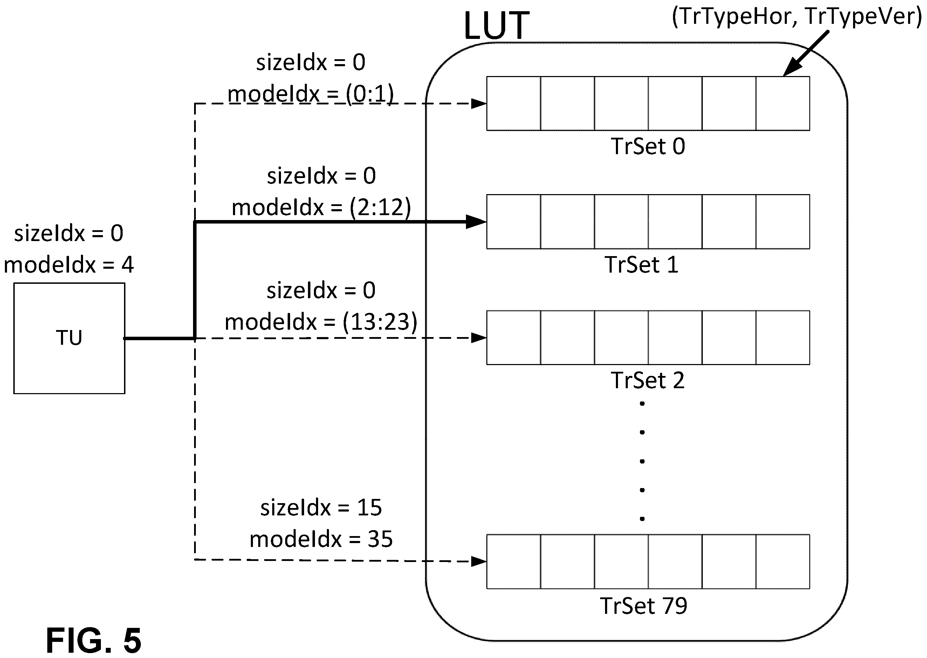

The aspects described and contemplated in this application may be implemented in many different forms. FIGS. 5-14B described herein may provide some embodiments, but other embodiments are contemplated. The discussion of FIGS. 5-14B does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

The terms HDR (high dynamic range) and SDR (standard dynamic range) may be used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

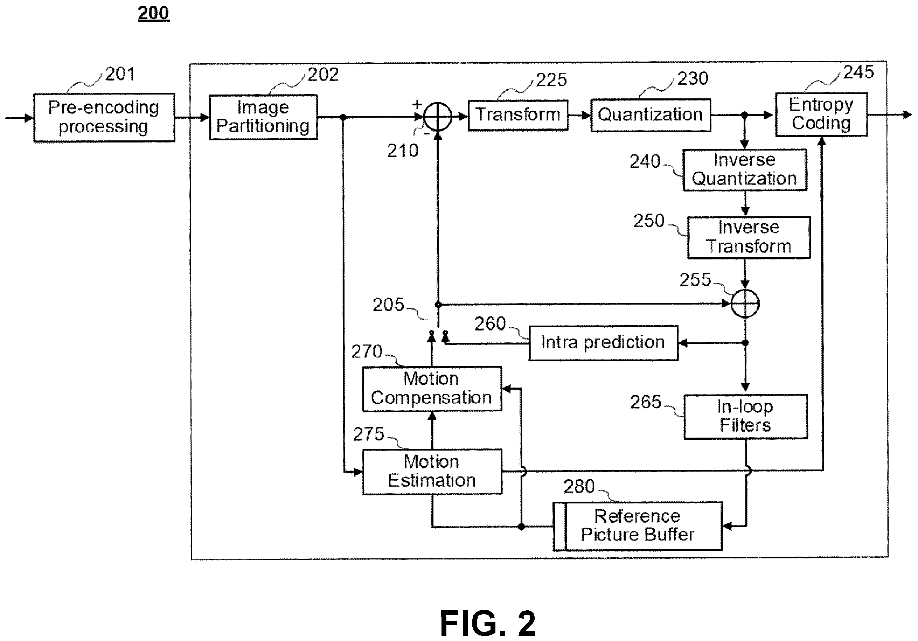

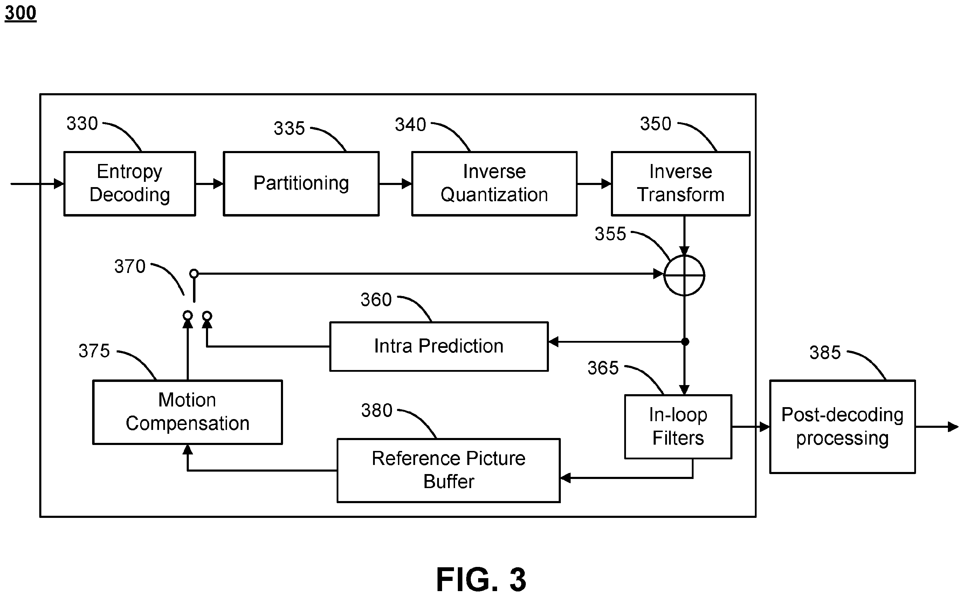

Various methods and other aspects described in this application may be used to modify modules, for example, in-loop filters modules (265 and 365), of a video encoder 200 and decoder 300 as shown in FIG. 2 and FIG. 3, respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described in the present application, such as coefficients, filter sizes, etc. These and other specific values are for purposes of describing examples and the aspects described are not limited to these specific values.

FIG. 2 is a diagram showing an example video encoder (e.g., an example block-based hybrid video encoder) 200. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder 300. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). For a given picture, the contents of the reference picture buffer 380 on the decoder 300 side may be identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

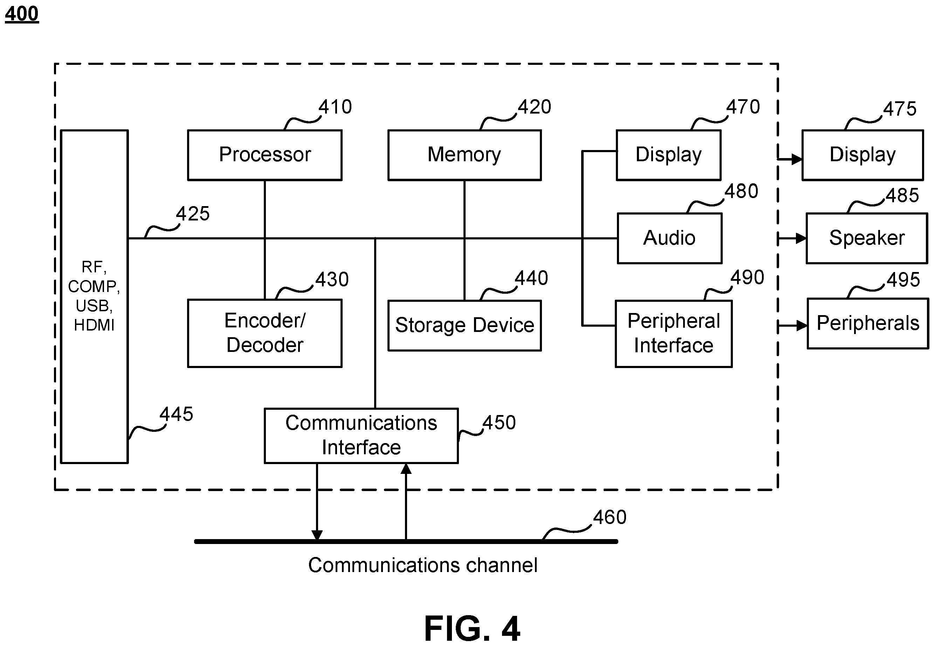

FIG. 4 is a diagram showing an example of a system in which various aspects and embodiments described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, obtaining a block; determining a prediction mode for the block; on a condition that the prediction mode is a first intra prediction mode, determining a first transform index derivation mode (TIDM) value; on a condition that the prediction mode is a second intra prediction mode, determining a second TIDM value; determining an inverse transform index based on the determined first or second TIDM value, wherein the inverse transform index identifies an inverse transform; and performing inverse transform for the block based on the inverse transform, etc.

Other example processes that may be performed by a decoder include receiving an encoded set of filters, wherein the encoded set of filters comprises a plurality of encoded coefficients; receiving an indication of a size index associated with the encoded set of filters; and decoding the plurality of encoded coefficients based on the size index, etc.

Other example processes that may be performed by a decoder include receiving a set of encoded filter coefficients; decoding a first filter coefficient and a second filter coefficient of the set of encoded filter coefficients to determine a first value of the first filter coefficient and a second value of the second filter coefficient; determining a difference between the first value and the second value; and decoding a third filter coefficient based on the difference between the first value and the second value, etc.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, determining a prediction mode for a block; on a condition that the prediction mode is a first intra prediction mode, determining a first transform index derivation mode (TIDM) value; on a condition that the prediction mode is a second intra prediction mode, determining a second TIDM value; determining a transform index based on the determined first or second TIDM value, wherein the transform index identifies an transform; and performing transform for the block based on the transform, etc.

Other example processes that may be performed by an encoder include identifying, based on rate distortion, a set of filters, wherein the set of filters comprises a plurality of coefficients; determining a size index associated with the set of filters; encoding the plurality of coefficients to generate a plurality of encoded coefficients; and including, in video data, the plurality of encoded coefficients and an indication of the size index, etc.

Other example processes that may be performed by an encoder include identifying a set of filter coefficients; encoding a first value of a first filter coefficient of the set of encoded filter coefficients, and a second value of a second filter coefficient of the set of encoded filter coefficients; determining a difference between the first value and the second value; and encoding a third filter coefficient based on the difference between the first value and the second value, etc.

Other example processes that may be performed by an encoder include identifying a filter comprising a first coefficient and a second coefficient; encoding a value of the first coefficient using an exponential-Golomb code to generate a binary code having a first bitlength; identifying a second bitlength for representing a value of the second coefficient; and encoding the second coefficient with a modified exponential-Golomb code to generate an encoded second coefficient, wherein a prefix of the encoded second coefficient comprises n zero-bits, and wherein n is the difference between the second bitlength and the first bitlength, etc.

Other example processes that may be performed by an encoder include identifying a filter comprising a set of coefficients; encoding the set of coefficients using an entropy coder, wherein a probability associated with each coefficient of the set of coefficients depends on a corresponding spatial position of the coefficient; and including, in video data, the encoded set of coefficients, etc.

Other example processes that may be performed by an encoder include identifying a first sign of a first coefficient, and a second sign of a second coefficient; determining a third sign of a sum of the first coefficient and the second coefficient; encoding a fourth sign of a third coefficient based on the third sign of the sum; and including, in video data, the encoded fourth sign, etc.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in some embodiments the encoder signals (e.g., to a decoder) a size index of a filter or set of filters, etc. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Many embodiments are described herein. Features of embodiments may be provided alone or in any combination, across various claim categories and types. Further, embodiments may include one or more of the features, devices, or aspects described herein, alone or in any combination, across various claim categories and types . For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions, medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

The number of transform candidates may increase for low frequency non-separable transform (LFNST)/non-separable primary transform (NSPT) and/or intra multiple transform set (intra-MTS). Multiple transform set selection (MTSS) may involve testing a transform set (e.g., an alternative transform set in addition to the initial transform set for modes relying on virtual intra prediction mode (VIPM) for LFNST/NSPT). The introduction of these transforms may increase rate-distortion gain. These transforms may increase the encoder complexity (e.g. ,as additional check operations are performed during the rate-distortion optimization loop).

The selection of a transform may depend on the intra-prediction mode of the current block for intra-MTS and/or LFNST/NSPT. The intra-prediction acts as input to a lookup table (LUT) to get a (e.g., suitable) transform set for the block. The correlation between the directional intra-modes and residuals type may be utilized (e.g., because residual samples tend to have larger absolute values if they are far away from the reference samples).

Techniques for implicitly deriving the transform index based on the value of the intra mode modulo a parameter (e.g., (the value of the intra mode) modulo (a parameter)) may be used to introduce diversity during the intra-loop. For one or more (e.g., certain) modes (e.g., MIP, DIMD, TIMD, SGPM, EIP, IntraTMP, IBC, and inter blocks), a VIPM may be used to emulate an intra mode at the encoder and decoder side. The VIPM may prevent optimal distribution of the transforms (e.g., because the VIPM is shared by all the intra-mode candidates at a CU level). Techniques for deriving the transform in the transform set are provided herein. The techniques may be applied to implicit transform selection in LFNST/NSPT, MTS, MTSS, and/or the like.

Feature(s) associated with intra MTS are provided herein.

In a coding tool, DST7 and DCT8 transform kernels may be used, e.g., in addition to DCT2. The kernels may be used for intra coding and/or inter coding. Transform skip may be used.

In a coding tool, one or more additional primary transforms, e.g., DCT5, DST4, DST1, and/or identity transform (IDT), may be employed. One or more MTS sets may be made dependent on a transform unit (TU) size and/or intra mode information. For blocks predicted using intra template matching prediction (IntraTMP), a decoder-side intra mode derivation (DIMD) procedure may be used on a prediction block, e.g., to derive an intra mode that is used for a transform selection. For example, a horizontal gradient and/or a vertical gradient may be calculated for a predicted sample, e.g., to build a Histogram of Gradients (HoG). The intra prediction mode with one or more histogram amplitude values (e.g., the largest histogram amplitude values) may be used to determine the MTS transform set.

One or more (e.g., 16) different TU sizes may be considered. For a TU size, five different classes may be considered, e.g., depending on intra mode information. For a class, one, four, and/or six different transform pairs may be considered. The number of intra MTS candidates may be adaptively selected (e.g., between the one, four, and/or six MTS candidates). For example, the number of intra MTS candidates may be adaptively selected between the one, four, and/or six MTS candidates depending on the sum of the absolute value of transform coefficients. The sum may be compared against thresholds (e.g., two fixed thresholds) to determine the total number of allowed MTS candidates as described herein:

1 candidate: sum <= th0

4 candidates: th0 < sum <= th1

6 candidates: sum > th1

A total of 80 (e.g., 16 transform sizes times 5 classes) different classes may be considered. One or more of the different classes may share the same transform set. For example, in a video coding device, 58 (e.g., less than 80) unique entries may exist in the resultant look-up table (LUT).

FIG. 5 illustrates an example explicit MTS set selection (e.g., modeIdx=4 and sizeIdx=0).

For angular modes, a joint symmetry over a TU shape and intra prediction may be considered. A mode i (e.g., i > 34) with a TU shape A×B may be mapped. For example, a mode i (e.g., i > 34) with a TU shape A×B may be mapped to the same class corresponding to the mode j = (68 - i) with a TU shape B×A. For a transform pair, the order of the horizontal transform kernel and the vertical transform kernel may be swapped. For example, a 16x4 block with mode 18 (e.g., horizontal prediction) and a 4x16 block with mode 50 (e.g., vertical prediction) may be mapped to the same class. The vertical and horizontal transform kernels may be swapped. For the wide-angle modes, an angular mode (e.g., the nearest angular mode) may be used for the transform set determination. For example, mode 2 may be used for one or more (e.g., all) of the modes between -2 and -14. Mode 66 may be used for mode 67 to mode 80. A dedicated mode index may be assigned to a matrix-based intra prediction (MIP), e.g., resulting in a total of 36 possible modes entries in the LUT. An example of transform set selection in the LUT for a given TU size and intra mode may be illustrated in FIG. 5.

IDT may be applied for one or more blocks that are 16x16 or smaller and/or may have intra modes within a range around horizontal and/or vertical intra directions (e.g., the proximity of horizontal and/or vertical intra directions). The proximity may be defined by a threshold that depends on the block size. For example, if the transform index is equal to 3 and a block is 16x16 or smaller and has intra modes within the proximity of horizontal and/or vertical intra directions, the horizontal and/or vertical identity transform may be applied.

Implicit MTS may be a faster version of the explicit MTS. For example, the implicit MTS may test a pair of horizontal and vertical transforms, e.g., instead of two or more pairs. The implicit MTS mode may be faster than the explicit MTS mode and/or may achieve a higher compression gain if the implicit MTS mode is compared with the case where the MTS is switched off.

In a coding tool, implicit MTS may be implemented by considering DCT2 and/or DTS7 transform. For example, if the height (e.g., nTbH) or the width (e.g., nTbW) of a block is between 4 and 16, the vertical transform or the horizontal transform may be set to DST7, respectively. If the height or the width of the block is lower than 4 or higher than 16, DCT2 may be selected (e.g., for the vertical transform or the horizontal transform).

$$trTypeHor = (\, nTbW >= 4 \; \&\& \; nTbW <= 16 \,) ? \, DST7 : DCT2$$

$$trTypeVer = (\, nTbH >= 4 \; \&\& \; nTbH <= 16 \,) ? \, DST7 : DCT2$$

Implicit transform selection may be based on intra prediction mode.

Implicit transform selection based on intra prediction mode may involve alternating between different transform types for consecutive intra-prediction modes (e.g., during rate-distortion optimization (RDO)). The transform lookup table may be used to distribute transforms from the same set across consecutive intra modes.

The index of the corresponding transform pair in the set (e.g., *trIdx*) may be computed as a modulo of the intra prediction mode:

$$trIdx \; = \; IPM \,\% \, M$$

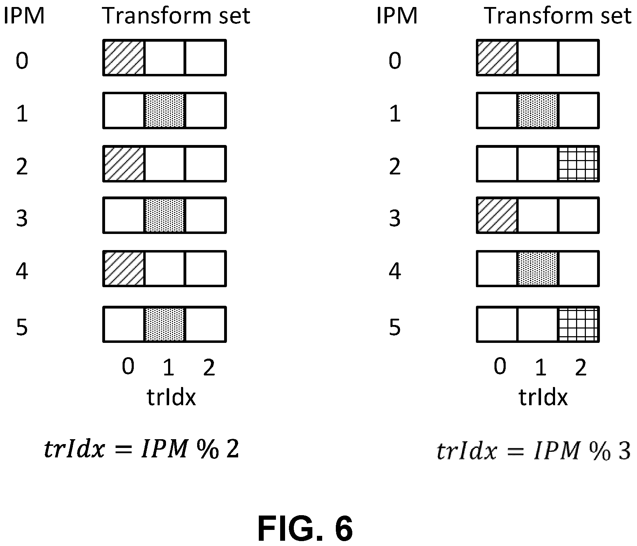

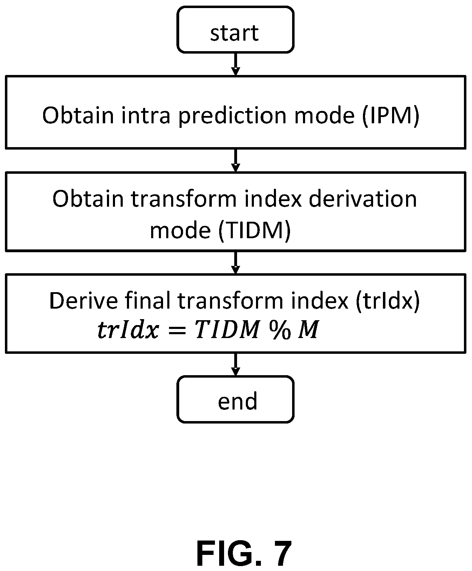

where M is an integer value with a minimum value of 0 and a maximum value defined by the maximum number of transform candidates in the transform set. FIG. 6 illustrates an example of implicit transform selection based on the value of the IPM. FIG. 6 illustrates an example of transform index derivation for M=2 and M=3. FIG. 7 illustrates an example flowchart for implicit transform selection.

Technique(s) described herein may be used for intra MTS, LFNST/NSPT and MTSS. In MTSS, these technique(s) may be used to select the transform candidate (e.g., in the alternative transform set), and/or to define a transform fusion order.

The LFNST design may be extended as follows. The number of LFNST sets (S) and candidates (C) in a set may be extended to S=35 and C=3, and the LFNST set (lfnstTrSetIdx) for a given intra mode (predModeIntra) may be derived according to the following formula:

$$\text{For predModeIntra} < 2, \text{lfnstTrSetIdx may be equal to 2}$$

$$\text{lfnstTrSetIdx} = \text{predModeIntra, for predModeIntra in [2,34]}$$

$$\text{lfnstTrSetIdx} = 68 - \text{predModeIntra, for predModeIntra in [35,66]}$$

Three different kernels, LFNST4, LFNST8, and LFNST16, may be defined to indicate LFNST kernel sets and may be applied to 4xN/Nx4 (N≥4), 8xN/Nx8 (N≥8), and MxN (M, N≥16), respectively.

The kernel dimensions may be specified by:

$$(\text{LFSNT4, LFNST8*, LFNST16*}) = (16x16, 32x64, 32x96)$$

The forward LFNST may be applied to the top-left low frequency region, which may be called region-of-interest (ROI). When LFNST is applied, primary-transformed coefficients that exist in the region other than ROI may be zeroed out.

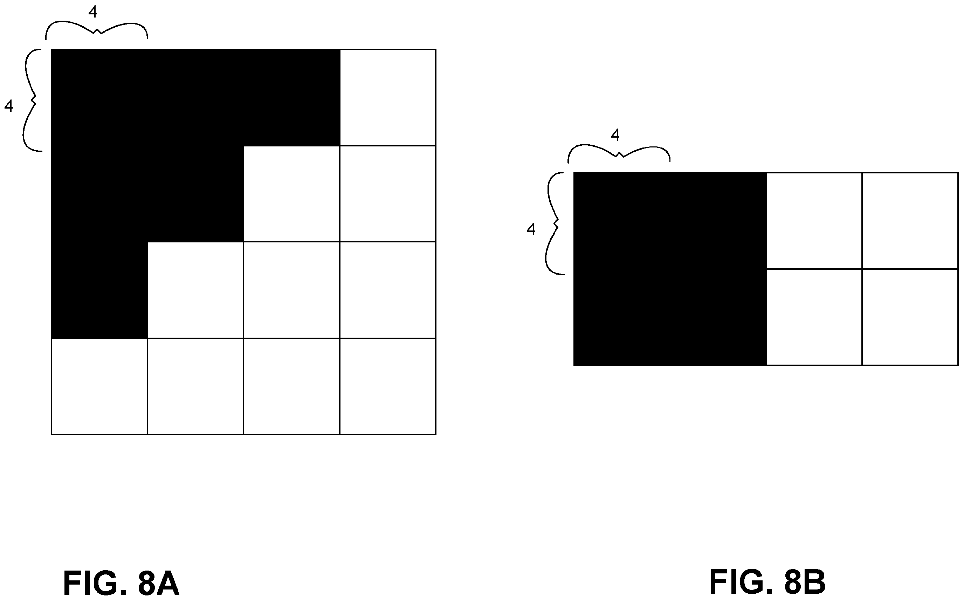

FIG. 8A depicts an example ROI for LFNST16. As shown in FIG. 8A, the ROI may comprise six 4x4 sub-blocks, which may be consecutive in scan order. Since the number of input samples may be 96, a transform matrix for forward LFNST16 may be Rx96. For example, R may be chosen to be 32 and 32 coefficients (e.g., two 4x4 sub-blocks) may be generated from forward LFNST16. The 32 coefficients may be placed following coefficient scan order.

FIG. 8B depicts an example ROI for LFNST8. The forward LFNST8 matrix may be Rx64 and R may be chosen to be 32. The generated coefficients may be located in the same manner as with LFNST16.

The mapping from intra prediction modes to these sets may be shown in Table 1.

Table 1. Example mapping of intra prediction modes to LFNST set index

| Intra pred. mode | -14 | -13 | -12 | -11 | -10 | -9 | -8 | -7 | -6 | -5 | -4 | -3 | -2 | -1 | 0 | 1 |
|---|---|---|---|---|---|---|---|---|---|---|---|---|---|---|---|---|
| **LFNST set index** | 2 | 2 | 2 | 2 | 2 | 2 | 2 | 2 | 2 | 2 | 2 | 2 | 2 | 2 | 0 | 1 |
| **Intra pred. mode** | **2** | **3** | **4** | **5** | **6** | **7** | **8** | **9** | **10** | **11** | **12** | **13** | **14** | **15** | 16 | 17 |
| **LFNST set index** | **2** | **3** | **4** | **5** | **6** | **7** | **8** | **9** | **10** | **11** | **12** | **13** | **14** | **15** | 16 | 17 |
| **Intra pred. mode** | 18 | 19 | 20 | 21 | 22 | 23 | 24 | 25 | 26 | 27 | 28 | 29 | 30 | 31 | 32 | 33 |
| **LFNST set index** | 18 | 19 | 20 | 21 | 22 | 23 | 24 | 25 | 26 | 27 | 28 | 29 | 30 | 31 | 32 | 33 |
| **Intra pred. mode** | 34 | 35 | 36 | 37 | 38 | 39 | 40 | 41 | 42 | 43 | 44 | 45 | 46 | 47 | 48 | 49 |
| **LFNST set index** | 34 | 35 | 36 | 37 | 38 | 39 | 40 | 41 | 42 | 43 | 44 | 45 | 46 | 47 | 48 | 49 |
| **Intra pred. mode** | 50 | 51 | 52 | 53 | 54 | 55 | 56 | 57 | 58 | 59 | 60 | 61 | 62 | 63 | 64 | 65 |
| **LFNST set index** | 18 | 17 | 16 | 15 | 14 | 13 | 12 | 11 | 10 | 9 | 8 | 7 | 6 | 5 | 4 | 3 |
| **Intra pred. mode** | 66 | 67 | 68 | 69 | 70 | 71 | 72 | 73 | 74 | 75 | 76 | 77 | 78 | 79 | 80 | |
| **LFNST set index** | 2 | 2 | 2 | 2 | 2 | 2 | 2 | 2 | 2 | 2 | 2 | 2 | 2 | 2 | 2 | |

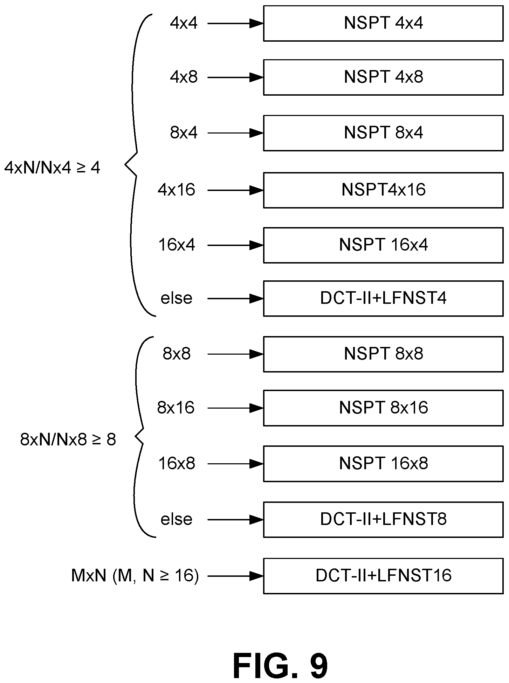

NSPT (Non-Separable Primary Transform) may be designed to replace the two stages of transform (e.g., DCT2-LFNST) with a single non-separable transform. FIG. 9 depicts an example of block sizes for which non-separable primary transform (NSPT) may be applied where LFNST may be applied for the rest. As shown in FIG. 9, NSPT may be allowed (e.g., only allowed) for small blocks.

NSPTs may comprise 35 sets with 3 candidates in a (e.g., each) set. For example, the kernels of NSPT may have the following shapes: (NSPT4x4: 16x16); (NSPT4x8/NSPT8x4: 32x20); (NSPT8x8: 64x32); (NSPT4x16/NSPT16x4: 64x24); or (NSPT8x16/NSPT16x8: 128x40). The 12, 32, 40 and 88 coefficients may be zeroed-out, for example using (NSPT4x8/NSPT8x4), (NSPT8x8), (NSPT4x16/NSPT16x4) and (NSPT8x16/NSPT16x8) respectively.

Multiple transform set selection (MTSS) may be performed for LFNST/NSPT. The LFNST/NSPT transform set may be decided (e.g., implicitly decided) by an intra prediction mode (IPM). For a block coded with PLANAR, DC or directional modes, the IPM may, for example, be set as the intra prediction mode itself. For a DIMD coded block, the IPM may, for example, be set as the best mode derived by the DIMD process with neighboring reconstructed pixels. For a TIMD coded block, the IPM may, for example, be set as the best mode derived by the TIMD process. For a MIP or ITMP coded block, the IPM may, for example, be set as the best mode derived by the DIMD process with the prediction. For an SGPM coded block, the IPM may, for example, be set as the mode corresponding to the split mode of SGPM.

The prediction strategies of DIMD, TIMD, SGPM, MIP, EIP and/or ITMP may be different from normal intra prediction modes like PLANAR, DC, and directional modes. DIMD, TIMD, SGPM and ITMP may allow combination of multiple predictions. MIP may make a prediction using matrix calculation. ITMP may reference the reconstructed region in the current picture. The prediction residual may illustrate different feature(s) from the derived IPM.

MTSS may allow CUs coded with DIMD, TIMD, MIP, EIP, SGPM and/or ITMP to select one LFNST/NSPT transform set out of two candidate sets. If the current block is coded with DIMD, TIMD, MIP, EIP, SGPM, or ITMP and LFNST/NSPT is used, a (e.g., one more) bin may be employed to indicate whether the first candidate transform set or the second candidate transform set is selected. The first candidate transform set may remain (e.g., the same as in a current version of ECM). The second candidate transform set may be derived by the DIMD process with neighboring reconstructed pixels. If a TIMD coded block applies fusion, the second TIMD IPM may be considered first to derive the second candidate set. For a SGPM coded block, the two IPM that SGPM uses may be considered first to derive the second candidate set. The difference between the first and second IPM may be larger than 4 (e.g., to maintain the diversity).

Feature(s) associated with a transform index derivation mode are provided herein.

A transform index derivation mode (TIDM) may be used by prediction modes relying on a VIPM to implicitly derive a transform index in implicit transform selection based on the intra-mode. A value (e.g., a unique value) may be assigned to a (e.g., each) candidate within the same prediction mode. This approach may enable optimal distribution of the transforms across candidates of the same prediction mode during the RDO loop.

Table 2 illustrates an example of the TIDM used for a (e.g., each) prediction mode. The TIDM value of angular mode may be the IPM value.

Table 2. Example prediction modes and corresponding transform index derivation modes

| Prediction mode | Transform index derivation mode (TIDM) |
|---|---|
| MIP | MIP matrix index |
| DIMD | DIMD derived mode |
| TIMD | TIMD derived mode |
| SGPM | Split direction or SGPM index |
| EIP | EIP model index |
| IntraTmp | intraTmp index |
| Inter | Inter candidate's VIPM |
| Angular mode | Angular mode |

If the prediction mode is a first intra prediction mode, a first transform index derivation mode (TIDM) value may be determined. If the prediction mode is a second intra prediction mode, a second TIDM value may be determined. The first and second intra prediction modes may be different intra predictions modes. For example, the first intra prediction mode may be EIP, and the second intra prediction mode may be SGPM. The first and second intra prediction modes may be the same intra prediction mode with different associated indices. For example, the first intra prediction mode may be MIP associated with a first index, and the second intra prediction mode may be MIP associated with a second index.

The TIDM may be set to a fixed value for one or more (e.g., certain) prediction modes. The TIDM may be set to a fixed value for one or more (e.g., certain) prediction modes depending on the size of the block.

Implicit transform selection may be based on a TIDM value.

Feature(s) described herein may be used to improve distribution of transform candidates based on the TIDM value. The value of M may be lower than the maximum number of candidates N, as described herein. To overcome this and provide more flexible ways to distribute the transform candidates based on the TIDM value, the following formula may be used to derive the transform index:

$$trIdx = TIDM \% M \% N$$

Where M is an integer value and N is the maximum number of candidates in the transform set. This process may be the same for the encoder and the decoder.

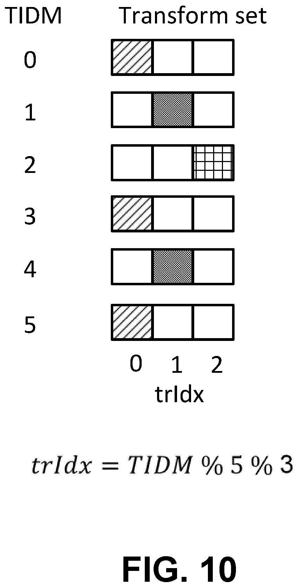

FIG. 10 illustrates an example of implicit transform index derivation with M = 5 and N = 3.

The value of M may depend on (e.g., may be set dependent to) the block size. This technique may be used to control the amount of diversity in the implicit transform set selection (e.g., at a block size level).

The value of M may depend on (e.g., may be set dependent on) the prediction mode. One or more prediction modes may benefit (e.g., benefit more) by having more diversity when distributing the transform candidates.

The value of M may depend on (e.g., may be set dependent on) the size of the block and the intra mode.

One or more of the feature(s) described herein may be used to derive the transform kernel in LFNST/NSPT. A syntax element may not be transmitted. The transform kernel may be derived at the decoder side (e.g., the same way as in the encoder).

One or more of the feature(s) described herein may be used to derive the primary transform pair in MTS.

One or more of the feature(s) described herein may be applied in MTSS to derive the transform candidate in the alternative transform set for MTSS for intra MTS and/or MTSS for LFNST/NSPT.

One or more high-level syntax (HLS) elements may be used (e.g., to control the usage and/or the parameters of the implicit transform selection process). The value of M may be signaled at a sequence level (e.g., in SPS) or at a picture level (e.g., in a PPS).

The usage of the above implicit transform selection process may be controlled at sequence level (e.g., using an SPS flag) or at a picture level (e.g., using a PPS flag).

The usage of the implicit transform selection process or the value of M may be controlled using a (e.g., separate) HLS element for a (e.g., each) prediction mode (e.g., at a sequence or at a picture level).

Implicit transform selection may be performed based on TIDM as an input to a lookup table.

Flexibility may be improved in the implicit transform selection process (e.g., by using a lookup table to map a transform index to the value of the TIDM of the mode). The distribution of the transform index may be defined (e.g.,

completely defined) based on the value of *TIDM* % *M.* An LUT index (*lutIdx*) is first computed as follows:

$$lutIdx \ = \ TIDM \ \% \ M$$

and used as input to a LUT to derive the *trIdx* using:

$$trIdx \ = \ LUT[lutIdx]$$

The lookup table may be fixed in the encoder and decoder. The process of deriving the *trIdx* based on the LUT may be the same for the encoder and the decoder.

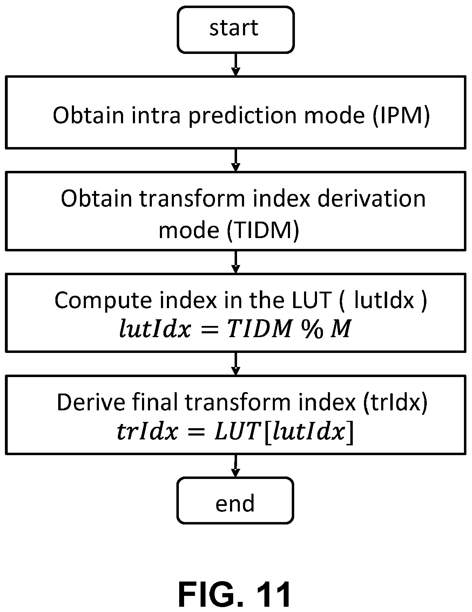

FIG. 11 illustrates an example flowchart of the transform index derivation process using a LUT (at the encoder and decoder).

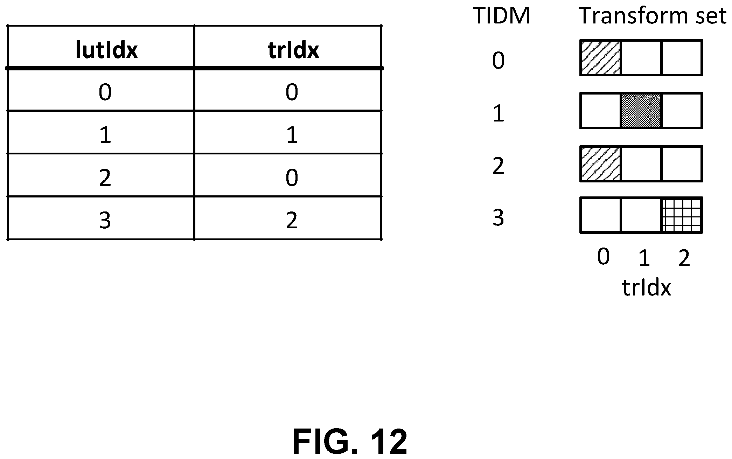

An example of implicit transform index derivation based on a LUT is illustrated in FIG. 12 (e.g., for *M* = 4).

The LUT may use the size of the block and the value of *lutIdx* (e.g., computed based on the value of the TIDM) to infer the transform index. The transform index *trIdx* may be obtained as follows:

$$trIdx \ = \ LUT[sizeIdx][lutIdx]$$

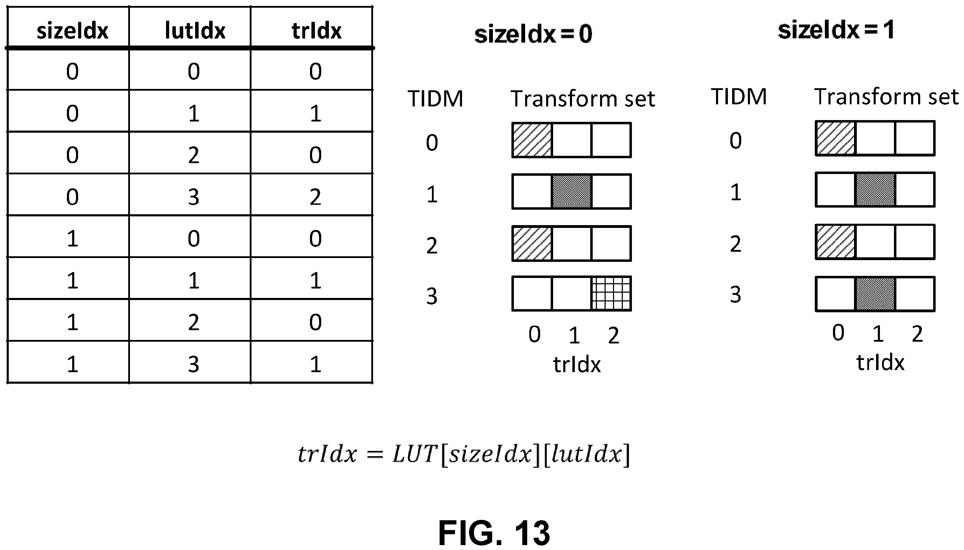

where a specific size index is mapped to a (e.g., each) block size. FIG. 13 illustrates an example implicit transform index based on a size index.

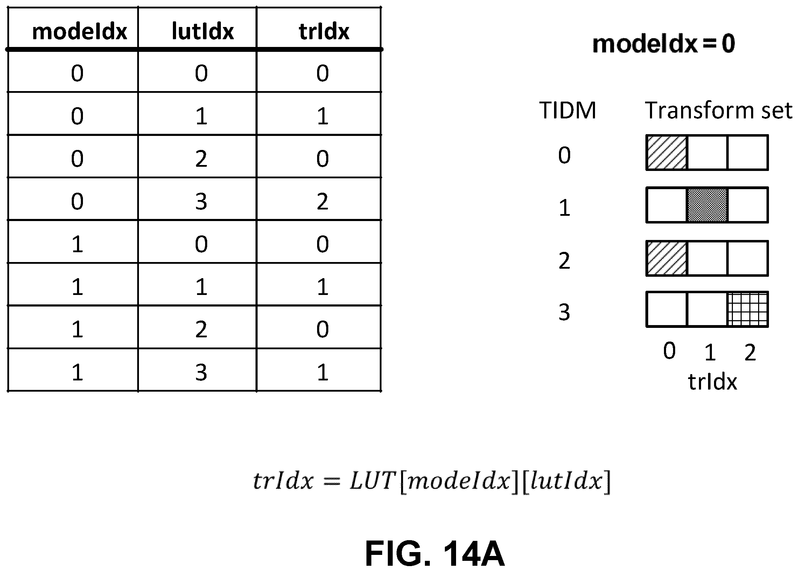

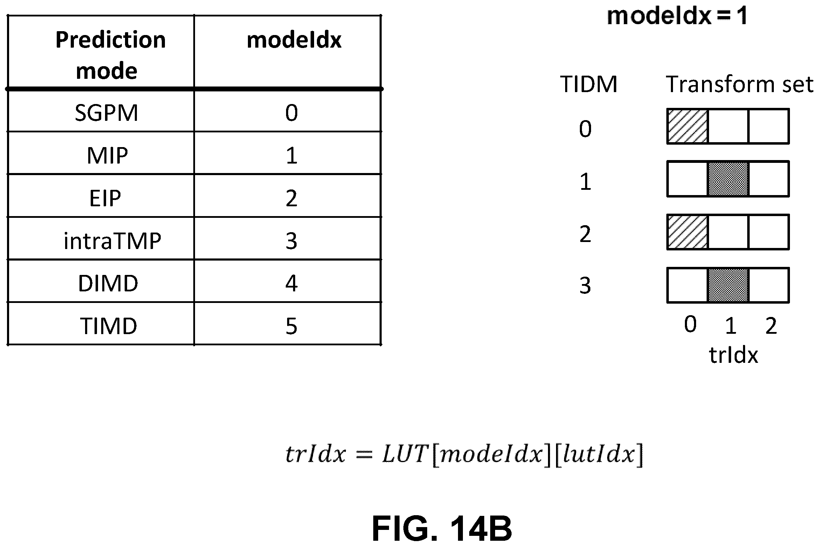

The LUT may use the prediction mode and the value of *lutIdx* to infer the transform index of the block. FIGs. 14A and 14B illustrate an example implicit transform index based on a mode index.

The transform index *trIdx* may be obtained as follows:

$$trIdx \ = \ LUT[modeIdx][lutIdx]$$

An example mapping between prediction mode and *modeIdx* is illustrated in Table 3.

Table 3. Example of intra mode and *modeIdx* mapping

| Prediction mode | modeIdx |
| --- | --- |
| MIP | 0 |
| EIP | 1 |
| SGPM | 2 |
| DIMD | 3 |
| TIMD | 4 |
| intraTMP | 5 |
| Inter | 6 |

The LUT may use the size of the block, the prediction mode, and the value of *lutIdx* to infer the transform index of the block. The transform index *trIdx* may be obtained as follows:

$$trIdx \ = \ LUT[modeIdx][sizeIdx][lutIdx]$$

One or more of the feature(s) described herein may be used to derive the secondary transform kernel in LFNST/NSPT. A syntax element may not be transmitted. The transform kernel may be derived at the decoder side (e.g., in the same way as in the encoder).

One or more of the feature(s) described herein may be used to derive the primary transform pair in MTS.

One or more of the feature(s) described herein may be used in MTSS to derive the transform candidate in the alternative transform set for MTSS for intra MTS and/or MTSS for LFNST/NSPT.

One or more high-level syntax (HLS) elements may be used (e.g., to control the usage and the parameters of this implicit transform selection process). The usage of the implicit transform selection process may be controlled at the sequence level using an SPS flag or at a picture level using a PPS flag.

A (e.g., separate) HLS element may be used to control the usage of the implicit transform selection process and/or the value of *M* for each prediction mode (e.g., at a sequence or at a picture level).

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method for video decoding, the method comprising:

   obtaining a block;
   determining a prediction mode for the block;
   on a condition that the prediction mode is a first intra prediction mode, determining a first transform index derivation mode (TIDM) value;
   on a condition that the prediction mode is a second intra prediction mode, determining a second TIDM value;
   determining a transform index based on the determined first or second TIDM value, wherein the transform index indicates an inverse transform; and
   performing inverse transform for the block based on the inverse transform.

2. The method of claim 1, wherein determining the transform index based on the determined first or second TIDM value comprises:

   determining an inverse transform set, from a plurality of inverse transform sets, based on the determined first or second TIDM value; and
   determining the transform index based on a number of inverse transform sets in the plurality of inverse transform sets, and a number of candidate inverse transforms in the inverse transform set.

3. The method of claim 1, wherein determining the transform index based on the determined first or second TIDM value comprises:

   determining an inverse transform set, from a plurality of inverse transform sets, based on the determined first or second TIDM value, wherein the plurality of inverse transform sets comprises a number of inverse transform sets, and the inverse transform set comprises a number of inverse transform indices; and
   determining the transform index based on (the determined first or second TIDM value modulo the number of inverse transform sets) modulo the number of inverse transform indices in the inverse transform set.

4. The method of any one of claims 1-3, wherein the transform index is a first transform index, the inverse transform is a first inverse transform, and the method further comprises identifying a second transform index based on the prediction mode, wherein the second transform index indicates a second inverse transform, and the first inverse transform and the second inverse transform are a primary inverse transform pair.

5. The method of any one of claims 1-4, wherein the method further comprises:

   receiving an indication that implicit inverse transform selection is enabled for the block, wherein determining the transform index based on the determined first or second TIDM value is further based on the indication; and
   determining an inverse transform kernel associated with the inverse transform.

6. The method of any one of claims 1, 4, and 5, wherein determining the transform index based on the determine first or second TIDM values comprises:

obtaining a plurality of inverse transform sets, wherein the plurality of inverse transform sets comprises a number of inverse transform sets;

identifying a lookup table index based on the prediction mode and the number of inverse transform sets; and

determining the transform index based on the lookup table index and a size of the block.

7. A video decoding device comprising a processor, wherein the processor is configured to implement the steps of the method according to any one of claims 1-6.

8. A method for video encoding, the method comprising:

determining a prediction mode for a block;

on a condition that the prediction mode is a first intra prediction mode, determining a first transform index derivation mode (TIDM) value;

on a condition that the prediction mode is a second intra prediction mode, determining a second TIDM value;

determining a transform index based on the determined first or second TIDM value, wherein the transform index identifies an transform; and

performing transform for the block based on the transform.

9. The method of claim 8, wherein determining the transform index based on the determined first or second TIDM value comprises:

determining a transform set, from a plurality of transform sets, based on the determined first or second TIDM value; and

determining the transform index based on a number of transform sets in the plurality of transform sets, and a number of candidate transforms in the transform set.

10. The method of claim 8, wherein determining the transform index based on the determined first or second TIDM value comprises:

determining a transform set, from a plurality of transform sets, based on the determined first or second TIDM value, wherein the plurality of transform sets comprises a number of transform sets, and the transform set comprises a number of transform indices; and

determining the transform index based on (the determined first or second TIDM value modulo the number of transform sets) modulo the number of transform indices in the transform set.

11. The method of any one of claims 8-10, wherein the transform index is a first transform index, the transform is a first transform, and the method further comprises identifying a second transform index based on the prediction mode, wherein the second transform index indicates a second transform, and the first transform and the second transform are a primary transform pair.

12. The method of any one of claims 8-11, wherein the method further comprises:

receiving an indication that implicit transform selection is enabled for the block, wherein determining the transform index based on the determined first or second TIDM value is further based on the indication; and

determining a transform kernel associated with the transform.

13. The method of any one of claims 8, 11, and 12, wherein determining the transform index based on the determine first or second TIDM values comprises:

obtaining a plurality of transform sets, wherein the plurality of transform sets comprises a number of transform sets;

identifying a lookup table index based on the prediction mode and the number of transform sets; and

determining the transform index based on the lookup table index and a size of the block.

14. A video encoding device comprising a processor, wherein the processor is configured to implement the steps of the method according to any one of claims 8-13.

15. A computer program product which is stored on a non-transitory computer readable medium and comprises program code instructions for implementing the steps of a method according to any one of claims 1-13 when executed by a processor.

**FIG. 1A**

EP 4 661 397 A1

116

122

102

| | 120 Transceiver | |
|---|---|---|
| 124 Speaker/ Microphone | | 134 Power Source |
| 126 Keypad | 118 Processor | 136 GPS Chipset |
| 128 Display/ Touchpad | | 138 Peripherals |

130 Non-Removable Memory

132 Removable Memory

# FIG. 1B

**FIG. 1C**

EP 4 661 397 A1

**FIG. 1D**

**FIG. 2**

EP 4 661 397 A1

**FIG. 3**

EP 4 661 397 A1

**400**

FIG. 4

**FIG. 5**

EP 4 661 397 A1

IPM    Transform set      IPM    Transform set

0                    0

1                    1

2                    2

3                    3

4                    4

5                    5

0   1   2               0   1   2

trIdx                    trIdx

$$trIdx = IPM \% 2$$               $$trIdx = IPM \% 3$$

# FIG. 6

start

Obtain intra prediction mode (IPM)

Obtain transform index derivation mode (TIDM)

Derive final transform index (trIdx)
$$trIdx = TIDM \% M$$

end

**FIG. 7**

EP 4 661 397 A1

FIG. 8B

FIG. 8A

**FIG. 9**

TIDM  Transform set

$$trIdx = TIDM \% 5 \% 3$$

## FIG. 10

EP 4 661 397 A1

```
                          ┌──────────────┐
                          │    start     │
                          └──────┬───────┘
                                 │
                                 ▼
          ┌─────────────────────────────────────────────┐
          │      Obtain intra prediction mode (IPM)      │
          └──────────────────────┬──────────────────────┘
                                 │
                                 ▼
          ┌─────────────────────────────────────────────┐
          │       Obtain transform index derivation      │
          │                  mode (TIDM)                 │
          └──────────────────────┬──────────────────────┘
                                 │
                                 ▼
          ┌─────────────────────────────────────────────┐
          │    Compute index in the LUT ( lutIdx )       │
          │        lutIdx = TIDM % M                     │
          └──────────────────────┬──────────────────────┘
                                 │
                                 ▼
          ┌─────────────────────────────────────────────┐
          │     Derive final transform index (trIdx)     │
          │        trIdx = LUT[lutIdx]                   │
          └──────────────────────┬──────────────────────┘
                                 │
                                 ▼
                          ┌──────────────┐
                          │     end      │
                          └──────────────┘
```

$$lutIdx = TIDM \% M$$

$$trIdx = LUT[lutIdx]$$

**FIG. 11**

EP 4 661 397 A1

| lutIdx | trIdx |
|--------|-------|
| 0 | 0 |
| 1 | 1 |
| 2 | 0 |
| 3 | 2 |

**FIG. 12**

| sizeIdx | lutIdx | trIdx |
|---------|--------|-------|
| 0 | 0 | 0 |
| 0 | 1 | 1 |
| 0 | 2 | 0 |
| 0 | 3 | 2 |
| 1 | 0 | 0 |
| 1 | 1 | 1 |
| 1 | 2 | 0 |
| 1 | 3 | 1 |

**sizeIdx = 0**

**sizeIdx = 1**

$$trIdx = LUT[sizeIdx][lutIdx]$$

## FIG. 13

| modeIdx | lutIdx | trIdx |
|---------|--------|-------|
| 0 | 0 | 0 |
| 0 | 1 | 1 |
| 0 | 2 | 0 |
| 0 | 3 | 2 |
| 1 | 0 | 0 |
| 1 | 1 | 1 |
| 1 | 2 | 0 |
| 1 | 3 | 1 |

**modeIdx = 0**

TIDM    Transform set

0

1

2

3

0   1   2
trIdx

$$trIdx = LUT[modeIdx][lutIdx]$$

**FIG. 14A**

EP 4 661 397 A1

| Prediction mode | modeIdx |
|---|---|
| SGPM | 0 |
| MIP | 1 |
| EIP | 2 |
| intraTMP | 3 |
| DIMD | 4 |
| TIMD | 5 |

**modeIdx = 1**

$$trIdx = LUT[modeIdx][lutIdx]$$

# FIG. 14B

EP 4 661 397 A1

Europäisches
Patentamt

European
Patent Office

Office européen
des brevets

# EUROPEAN SEARCH REPORT

**Application Number**

EP 24 30 5894

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/104476 A1 (DOUYIN VISION CO LTD [CN]; BYTEDANCE INC [US]) 23 May 2024 (2024-05-23) | 1,2,4,5, 7-9,11, 12,14,15 | INV. H04N19/12 H04N19/157 |
| Y | * sections 2.2.2, 2.2.3, 2.2.6, 2.2.7 (pages 60-68), section 4.5 (pages 85 to 92); paragraphs [0100] - [0102], [0122]; figures 1-3 * | 3,6,10, 13 | H04N19/176 H04N19/593 H04N19/70 |
| Y | US 2022/377334 A1 (NASER KARAM [FR] ET AL) 24 November 2022 (2022-11-24) * paragraphs [0048] - [0061] * | 3,6,10, 13 | |
| A | US 2020/389661 A1 (ZHAO XIN [US] ET AL) 10 December 2020 (2020-12-10) * paragraphs [0241] - [0288] * | 1-15 | |
| A | WANG (OPPO) F ET AL: "Non-EE2: Multiple Transform Set Selection for LFNST/NSPT", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0062 18 January 2024 (2024-01-18), XP030313882, Retrieved from the Internet: URL:https://jvet-experts.org/doc_end_user/documents/33_Teleconference/wg11/JVET-AG0062-v2.zip JVET-AG0062-presentation.pptx [retrieved on 2024-01-18] * page 1 - page 3 * | 1-15 | TECHNICAL FIELDS SEARCHED (IPC) H04N |

The present search report has been drawn up for all claims

| Place of search | Date of completion of the search | Examiner |
|---|---|---|
| Munich | 5 November 2024 | Hindelang, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5894

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | Publication date | Patent family member(s) | | Publication date |
|---|---|---|---|---|
| WO 2024104476 A1 | 23-05-2024 | NONE | | |
| US 2022377334 A1 | 24-11-2022 | CN | 114830656 A | 29-07-2022 |
| | | EP | 4032271 A1 | 27-07-2022 |
| | | US | 2022377334 A1 | 24-11-2022 |
| | | WO | 2021052804 A1 | 25-03-2021 |
| US 2020389661 A1 | 10-12-2020 | AU | 2020286361 A1 | 28-10-2021 |
| | | AU | 2023202827 A1 | 25-05-2023 |
| | | CA | 3136374 A1 | 10-12-2020 |
| | | CN | 113615187 A | 05-11-2021 |
| | | CN | 117998085 A | 07-05-2024 |
| | | EP | 3981153 A1 | 13-04-2022 |
| | | JP | 7279168 B2 | 22-05-2023 |
| | | JP | 7521061 B2 | 23-07-2024 |
| | | JP | 2022516732 A | 02-03-2022 |
| | | JP | 2023090947 A | 29-06-2023 |
| | | JP | 2024133137 A | 01-10-2024 |
| | | KR | 20210111857 A | 13-09-2021 |
| | | SG | 11202110795T A | 28-10-2021 |
| | | US | 2020389661 A1 | 10-12-2020 |
| | | US | 2022124356 A1 | 21-04-2022 |
| | | US | 2024048745 A1 | 08-02-2024 |
| | | WO | 2020247306 A1 | 10-12-2020 |

EPO FORM P0459

For more details about this annex : see Official Journal of the European Patent Office, No. 12/82